# EUROPEAN PATENT APPLICATION

(11) **EP 4 840 732 A1**
(43) Date of publication of application: **18.11.2026**
(21) Application number: 26177463.2
(22) Date of filing: 08.05.2026
(51) Int. Cl.: B62D 35/00, B62D 37/02

(54) **AUTOMOBILE WITH INCREASED REAR AERODYNAMIC LOAD**

(30) Priority: 12.05.2025 IT 202500010688
(71) Applicant: FERRARI S.p.A., 41100 Modena (IT)
(72) Inventor: DALLARI, Stefano, 41100 MODENA (IT); PAOLINI, Andrea, 41100 MODENA (IT); SARTORI, Stefano, 41100 MODENA (IT)
(74) Representative: Studio Torta S.p.A.

(57) **Abstract**

An automobile (1) is described, comprising an outer body (4), extending along a longitudinal axis (X) between a front end (7) and a rear end (8), a passenger compartment (6), formed within the outer body (4), a rear bumper (14), defining the rear end (8) of the outer body (4), and a rear wing (18) projecting in cantilever fashion from the outer body (4) and supported by at least one support bracket (20); the rear wing (18) is mounted movably with respect to the outer body (4) between an extended position, attainable during forward movement of the automobile (1), in which it projects rearwardly along the longitudinal axis (X) with respect to the rear bumper (14), and a retracted position, in which it is arranged forwardly with respect to the rear bumper (14) along the longitudinal axis (X).

## Description

### Cross-reference to related applications

This patent application claims priority from Italian patent application no. 102025000010688 filed on May 12, 2025, the entire disclosure of which is incorporated herein by reference.

### Technical field of the invention

The present invention relates to an automobile with increased rear aerodynamic load.

### State of the art

As is known, in high-performance automobiles, to which the following description will make explicit reference without thereby losing generality, solutions are constantly sought to generate high aerodynamic downforce (that is, a high aerodynamic force directed downwards) while at the same time attempting to minimize aerodynamic drag during forward motion. Consequently, the aerodynamic efficiency of an automobile is evaluated as a function of the ratio between the aerodynamic downforce and the corresponding aerodynamic drag during forward motion: the higher this ratio, the greater the aerodynamic efficiency of the automobile.

In high-performance automobiles, in order to increase the rear aerodynamic load (that is, the downward force generated by aerodynamic effect and acting on the rear wheels), rear wings are used which project in cantilever fashion from the rear bonnet and are rigidly connected to the chassis of the automobile by means of support brackets. An important characteristic of such rear wings is their inclination with respect to the longitudinal axis of the automobile, which normally coincides with the travel direction thereof; the aforementioned inclination must not be too great so as not to markedly increase drag together with the downforce effect, resulting in increased fuel consumption.

Also in the rear area of high-performance automobiles, there is the diffuser, also referred to as an extractor or extractor ramp, which is a specific fixed aerodynamic element located on the underside of the automobile itself and likewise intended to generate a downward force to increase road adhesion.

The diffuser is usually defined by a sort of inverted ramp that increases in volume along its extension, from practically flat in the portion arranged beneath the floor of the automobile to extremely hollowed and raised in the portion that terminates at the rear, so as to create the vacuum necessary for compressing the air coming from beneath the automobile; within many diffusers, vertical baffles are also mounted to channel the air and evenly divide the compression zones.

The diffuser creates a low-pressure area beneath the body of the moving automobile; in practice, it accelerates the airflow beneath the automobile and reduces its pressure, generating a pressure difference between the upper and lower surfaces of the automobile itself and thus creating downforce.

The combined effect of the rear wing and diffuser should generate high rear downforce while minimizing drag.

The efficiency of this combination, however, strictly depends on the position in which the rear wing is placed. In particular, in order to optimize the functioning of the rear wing and diffuser, these two aerodynamic elements should be as close as possible to each other, both in the longitudinal direction of the vehicle and in the vertical direction, and there should be as few other components as possible interposed between them.

However, the position of the rear wing in high-performance automobiles that are homologated for normal road use is constrained by the need to pass a low-speed rear impact test with an impact device, a sort of pendulum that strikes the rear of the automobile with its own nose both in a central position and laterally at 30° with respect to the longitudinal axis of the automobile itself.

This test is passed only if the sole component damaged as a result of the impact with the impact device is the rear bumper; therefore, in order to comply with the safety requirements established by the homologation regulations relating to low-speed impacts and, in particular, in order to satisfy the rear impact test, the rear wing in high-performance automobiles is always positioned further inward with respect to the rear limit of the automobile defined by the rear bumper; more precisely, the rear wing is always positioned further forward towards the front of the automobile with respect to the rear bumper by approximately 50 mm, so that, even in the case of maximum penetration of the pendulum of the impact device into the rear bumper, the rear wing is neither struck nor damaged by the pendulum itself.

The aforementioned position of the rear wing is, however, not optimal for aerodynamic purposes and tends to reduce the efficiency of the combined effect between the rear wing and the diffuser.

The purpose of the present invention is to provide an automobile which allows, in a simple and economical manner, to overcome the above-described drawback associated with known types of automobiles, and in particular, compared to the latter, exhibits lower aerodynamic resistance during forward travel and greater rear downforce while complying with the safety requirements established by homologation regulations relating to low-speed impacts for normal road use.

### Object and summary of the invention

According to the present invention, an automobile is provided as defined in the appended claims.

### Brief description of the drawings

For a better understanding of the present invention, two embodiments thereof are now described, purely by way of non-limiting examples, with reference to the accompanying drawings, in which:
- Figure 1 shows, in a perspective view, an automobile according to a preferred embodiment of the present invention;
- Figures 2 and 3 show, in a perspective view and in larger scale, a rear portion of the automobile of Figure 1 provided with a rear wing mounted on respective support brackets and arranged, respectively, in an extended position and in a retracted position;
- Figures 4 and 5 show, in a side view, the rear portion of the automobile of Figures 2 and 3 with the rear wing arranged respectively in the extended and retracted positions;
- Figure 6 shows, in an exploded perspective view and in a further larger scale, a portion of the rear wing of Figures 2 to 5 with a corresponding support bracket and associated components;
- Figure 7 shows, in a perspective view and in a further larger scale, a portion of the rear wing and the corresponding support bracket of Figure 6 in the extracted position of the rear wing itself;
- Figure 8 shows, in a perspective view and in a further larger scale, another part of the rear wing in the position of Figure 2 and the related support bracket with associated components;
- Figures 9 and 10 are perspective views analogous to Figures 2 and 3 and show a different embodiment of the present invention for achieving respective extracted and retracted positions of the rear wing; and
- Figures 11 and 12 are side views analogous to Figures 4 and 5 and show the rear wing respectively in the extended and retracted positions of Figures 9 and 10.

### Preferred embodiments of the invention

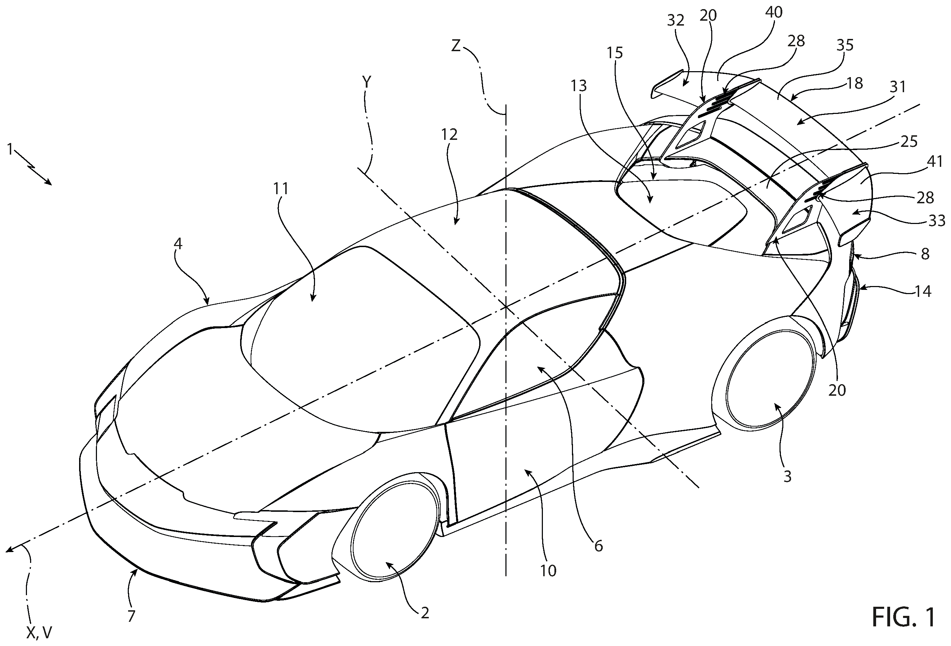

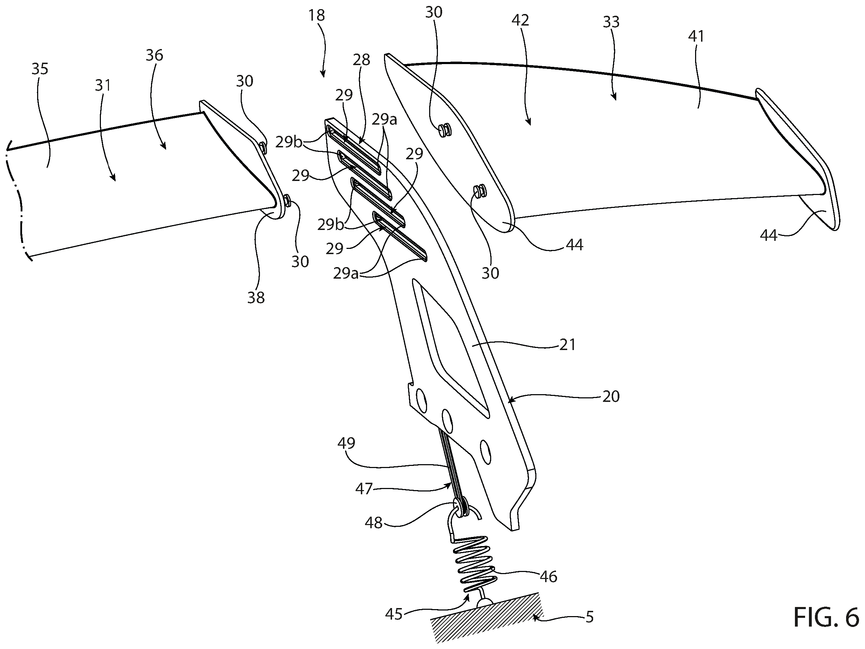

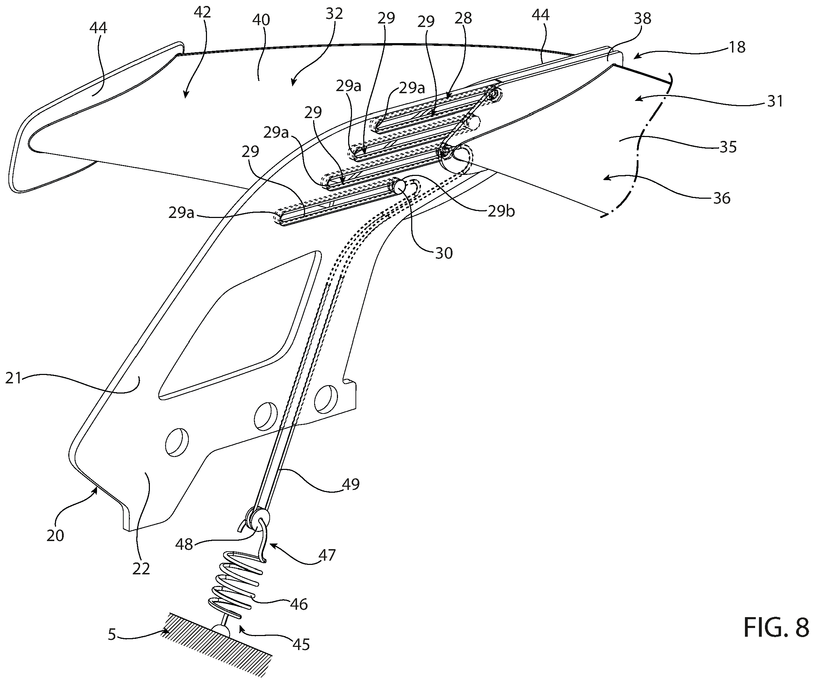

In figure 1, an automobile is generally indicated by 1, having two front wheels 2 and two rear wheels 3 and comprising an outer body 4, provided with a chassis 5 (per se known and only partially visible schematically in figures 6 and 8) and a passenger compartment 6, formed inside the outer body 4 between the front and rear wheels 2, 3 themselves.

In particular, the outer body 4 extends along a longitudinal axis X between a front end, indicated by reference 7, and a rear end, indicated by reference 8. The longitudinal axis X coincides with a normal travel direction V of the automobile 1.

The outer body 4 also extends in width and in height along a transverse axis Y and a vertical axis Z, which are perpendicular to each other and to the longitudinal axis X, so as to form a Cartesian set of orthogonal axes, fixed with respect to the outer body 4 itself.

The passenger compartment 6 is accessed through two or more lateral doors 10 equipped with windows; the passenger compartment 6 is thus delimited by the doors 10, by a front windscreen 11, by a roof 12, and by a rear window 13.

The outer body 4 comprises, among other things, a rear bumper 14, defining the rear end 8, and a rear bonnet 15 adjacent to the rear bumper 14.

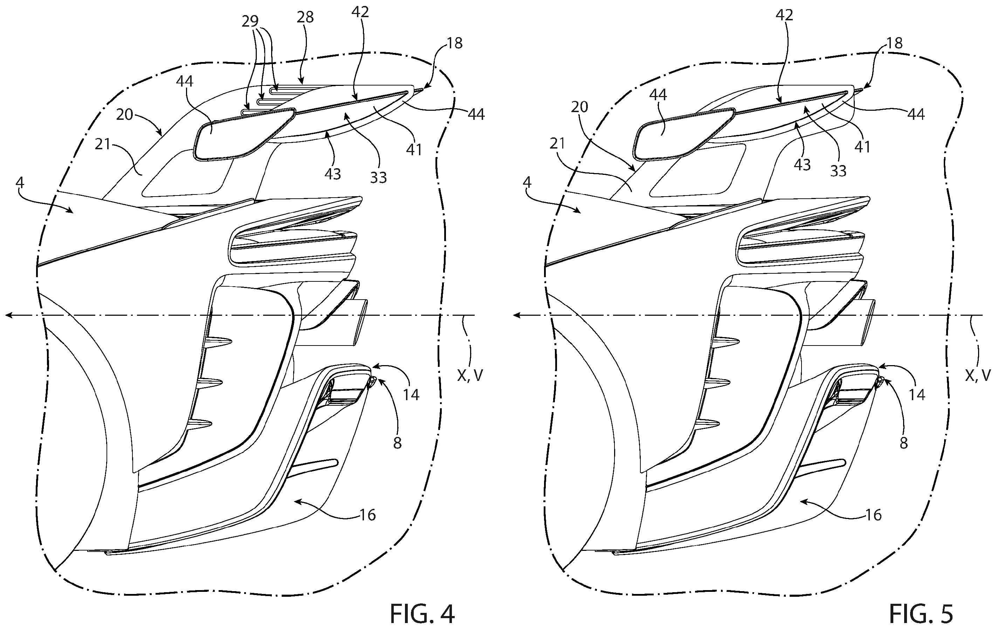

The automobile 1 further comprises a rear diffuser 16 (per se known and partially visible in figures 4 and 5), arranged beneath the rear bumper 14 and bearing against the underside of the automobile itself, and a rear wing 18, projecting in cantilever fashion from the rear bonnet 15 of the outer body 4 and rigidly fixed to the chassis 5, in a known manner not illustrated, by means of one or more support brackets 20, two in the non-limiting example illustrated herein.

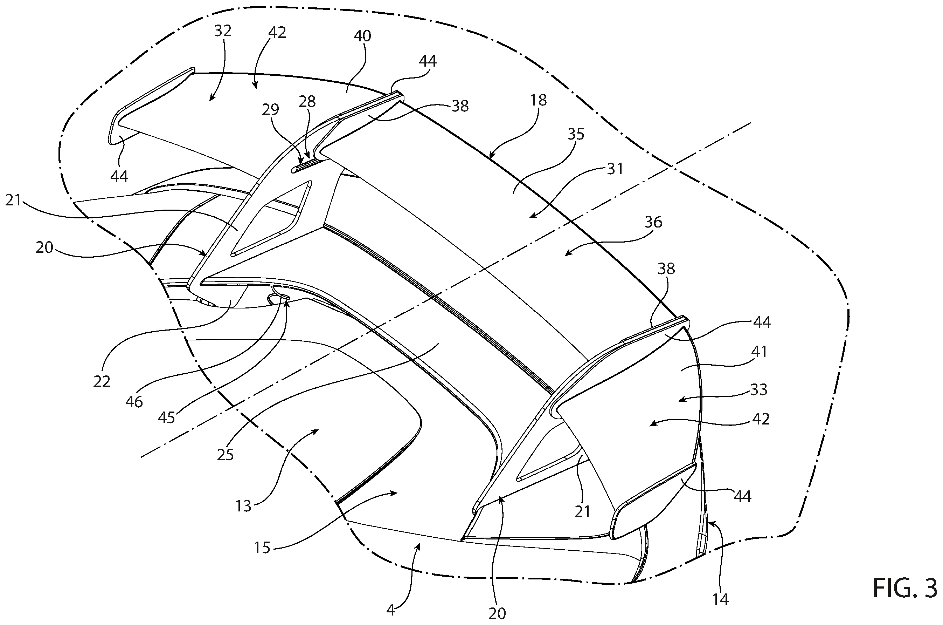

Advantageously, the rear wing 18 is mounted in a movable manner with respect to the outer body 4 between an extended position (figures 1, 2, 4, 7 and 8), which can be reached during the forward movement of the automobile 1 along the travel direction V, in which it protrudes rearwardly along the longitudinal axis X with respect to the rear bumper 14, and a retracted position (figures 3 and 5), in which it is arranged forwardly with respect to the rear bumper 14 along the longitudinal axis X or along the travel direction V.

In particular, the retracted position (figures 3 and 5) can be reached in the event of an external rear impact on the rear wing 18 arranged in the extended position (figures 1, 2, 4, 7 and 8) in such a manner that the rear wing 18 itself can move forward along a predefined stroke without sustaining damage.

More precisely, in the retracted position (figures 3 and 5), the rear wing 18 is arranged forward, along the longitudinal axis X or along the travel direction V, with respect to the rear end 8 of the outer body 4 by a predetermined non-zero amount, sufficient to prevent damage to the rear wing 18 itself during road homologation tests relating to low-speed impacts with a pendulum impact device as described in the introductory part of the present description.

In a completely analogous manner, in the extracted position (figures 1, 2, 4, 7 and 8), the rear wing 18 is arranged rearwardly, along the longitudinal axis X or along the travel direction V, with respect to the rear end 8 of the outer body 4 by a predetermined non-zero amount so as to maximise the downforce effect in combination with the diffuser 16.

The extracted position of rear wing 18 is achievable by virtue of the action of the airflow generated during the travel of the automobile 1 along the travel direction V.

In the specific preferred embodiment shown in Figures 1 to 8, the support brackets 20 are formed by two slotted vertical plates 21, cantilevered from the rear bonnet 15 and extending parallel to each other and to the longitudinal and vertical axes X, Z. In particular, each support bracket 20 is rigidly fixed, at its own lower portion 22, to the frame 5 in a known and not illustrated manner and projects upwards from a rear cross-member 25 of the outer body 4.

Advantageously, between each support bracket 20 and the rear wing 18, one or more guide members 28 are provided to guide the movement of the rear wing 18 itself between the extended and retracted positions.

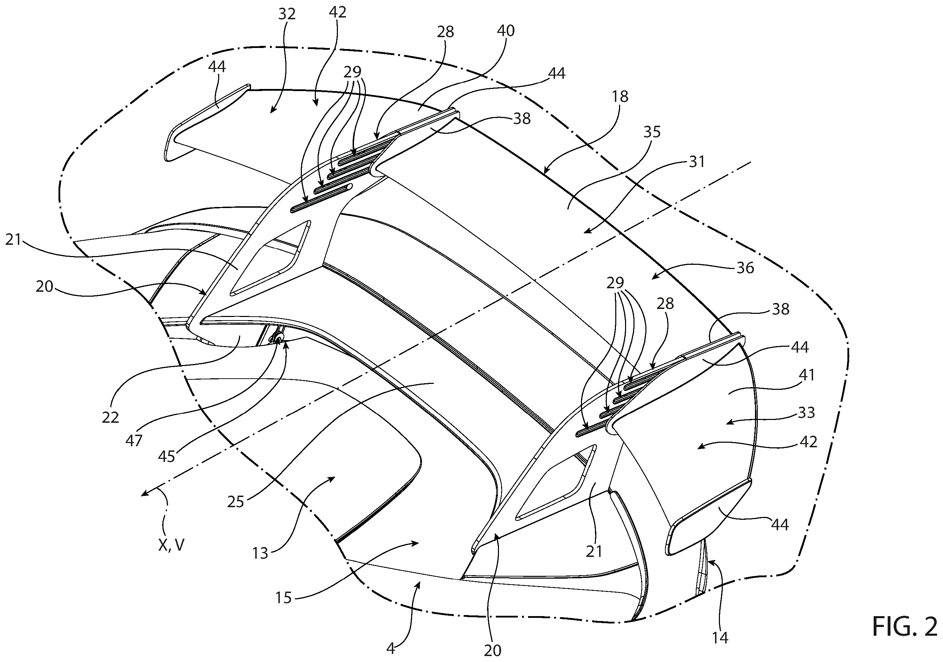

In the example illustrated in Figures 2 to 7, the guide members 28 define a rectilinear translational movement of the rear wing 18 between the extended and retracted positions.

In particular, the guide members 28 comprise respective straight through slots 29, four in the illustrated example, parallel to each other, formed on the plate 21 of each support bracket 20 and slidably engaged by respective projections 30 of the rear wing 18 itself. More precisely, the slots 29 of each plate 21 extend substantially parallel to the longitudinal axis X and are arranged in succession along the vertical axis Z.

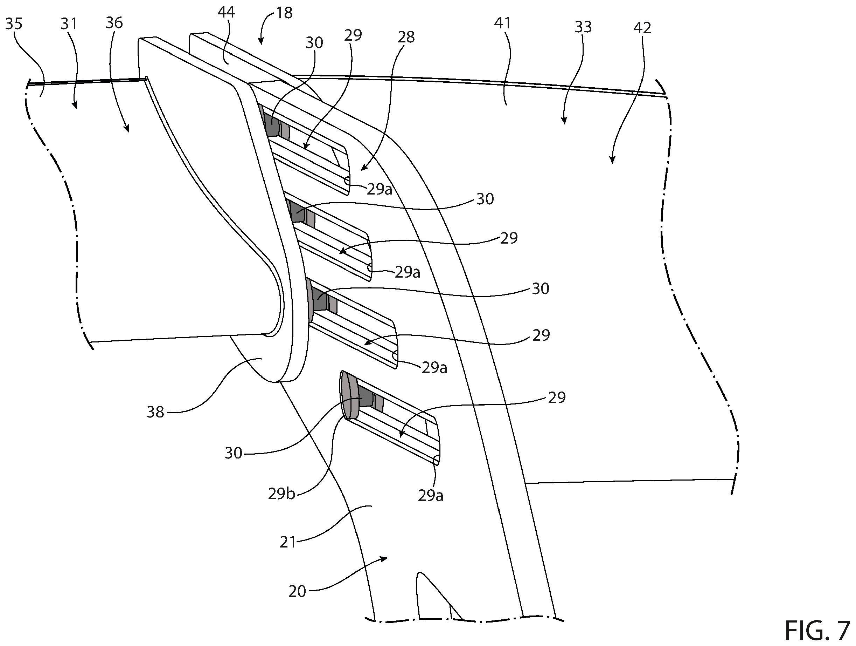

With reference to the travel direction V of the automobile 1, the slots 29 have respective front ends 29a (figures 6 and 7) which, in use, define respective front stop abutments for the corresponding projections 30 and thus define the retracted position (figures 3 and 5) of the rear wing 18. Still with reference to the travel direction V of the automobile 1, the slots 29 also have respective rear ends 29b (figures 6 and 7), opposite to the front ends 29a, which, in use, define respective rear stop abutments for the corresponding projections 30 and thus define the extended position (figures 1, 2, 4, 7 and 8) of the rear wing 18.

In greater detail, in the specific non-limiting embodiments illustrated in the attached figures, the rear wing 18 comprises a central portion 31, extending transversely between the support brackets 20, and two lateral portions 32, 33, arranged at the opposite lateral ends of the central portion 31 and each projecting in cantilever fashion from a respective one of the support brackets 20.

More specifically, the central portion 31 includes a wing 35 extending obliquely with respect to the longitudinal axis X and the vertical axis Z, diverging from the longitudinal axis X in the direction opposite to the travel direction V. The wing 35 has an intrados 36, which is concave and faces upwards, and an extrados 37, which is convex and faces downwards.

The central portion 31 further comprises two lateral ears 38 projecting in cantilever fashion from the opposite lateral ends of the wing 35 and extending parallel and adjacent to the respective support brackets 20; each ear 38 is furthermore provided with two of the projections 30, which slidably engage respective slots 29.

In a completely analogous manner, each lateral portion 32, 33 of the rear wing 18 comprises a respective wing 40, 41 having an extension along the transverse axis Y smaller than that of the wing 35 and extending also obliquely with respect to the longitudinal axis X and the vertical axis Z, diverging from the longitudinal axis X in the direction opposite to the travel direction V. The wings 40, 41 are symmetrical with respect to each other relative to the longitudinal axis X and each has an intrados 42, concave and facing upwards, and an extrados 43, convex and facing downwards.

Each lateral portion 32, 33 further comprises two lateral ears 44 projecting in cantilever fashion from the opposite lateral ends of the respective wing 40, 41 and extending parallel to the respective support brackets 20; one of the lateral ears 44 of each lateral portion 32, 33 is furthermore arranged, in use, adjacent to a respective support bracket 20, on the opposite side of the corresponding lateral ear 38 of the wing 35, and is also provided, in this case, with two of the projections 30 slidably engaging respective slots 29.

As can be seen in particular in Figures 6 and 7, in the non-limiting example illustrated herein, the projections 30 of the central portion 31 engage slots 29 of the respective support bracket 20, which are distinct from those engaged by the projections 30 of the lateral portions 32, 33 bearing on the same support bracket 20; in particular, proceeding from top to bottom along the vertical direction Z, the projections 30 of the central portion 31 engage the second and fourth slot 29 of the two support brackets 20, while the projections 30 of the lateral portions 32, 33 engage the first and third slot 29 of the respective support brackets 20.

With particular reference to Figures 6 and 8, the automobile 1 further comprises, for each support bracket 20, at least one stabilizing member 45 interposed between the frame 5 and the rear wing 18 and exerting a return force on the rear wing 18 itself in order to maintain it in the extended position during the forward movement of the automobile 1 along the travel direction V.

In practice, the return force exerted by stabilizing members 45 combines with that of the airflow generated during the travel of the automobile 1 along the travel direction V so as to stably maintain the rear spoiler 18 in the extracted position.

In the non-limiting example illustrated in Figures 6 and 8, each stabilizing member 45 comprises a cylindrical helical spring 46, having one end fixed, in a known manner and not shown, to the frame 5, and a pulley system 47, extending partly through the plate 21 of the respective support bracket 20 and connecting the other end of the spring 46 to two respective projections 30 of the central portion 31 and of the respective lateral portion 32, 33 of the rear wing 18.

In greater detail, each pulley system 47 comprises a grooved wheel 48 freely rotatably mounted on the corresponding end of the respective spring 46 and a cable 49, for example of the Bowden type, engaging the grooved wheel 48 and having its ends connected respectively to one of the two projections 30 of the central portion 31 of the rear wing 30 bearing on the respective support bracket 20 and to one of the two projections of the respective lateral portion 32, 33 of the rear wing 18 itself.

The stabilizing members 45 are configured to exert a modest return force on the rear wing 18 so that the latter does not resist a manual displacement or a displacement following a rear impact, from the extended position to the retracted position.

According to possible alternative embodiments not illustrated, the stabilizing members 45 could consist of devices of a different type, for example magnets or devices based on electromagnetic force to attract the rear wing 18 and keep it in the extended position.

In use, during the forward movement of the automobile 1 in the travel direction V, the rear wing 18 is loaded by the air vertically downwards and towards the rear, bringing the projections 30 into abutment against the rear ends 29b of the respective slots 29; in this way, the rear wing 18 is naturally urged towards the extracted position (figures 1, 2, 4, 7 and 8).

Such position is then maintained, even in the presence of normal road stresses, by the return action performed by the stabilizing members 45.

The rear wing 18, in the extended position, operates in clean air and is at a minimum distance from the diffuser 16; therefore, the automobile 1, during its forward movement, can benefit from an optimal position of the rear wing 18 for aerodynamic purposes and suitable to make the combined effect with the diffuser 16 efficient, also reducing aerodynamic drag and thus fuel consumption.

In the event of a rear impact on the automobile 1, the rear wing 18 is pushed forward into the retracted position (figures 3 and 5), simply overcoming the minimal resistance exerted by the stabilizing members 45 and moving into the condition suitable for passing the homologation tests for normal road use described in the introductory part of the present description.

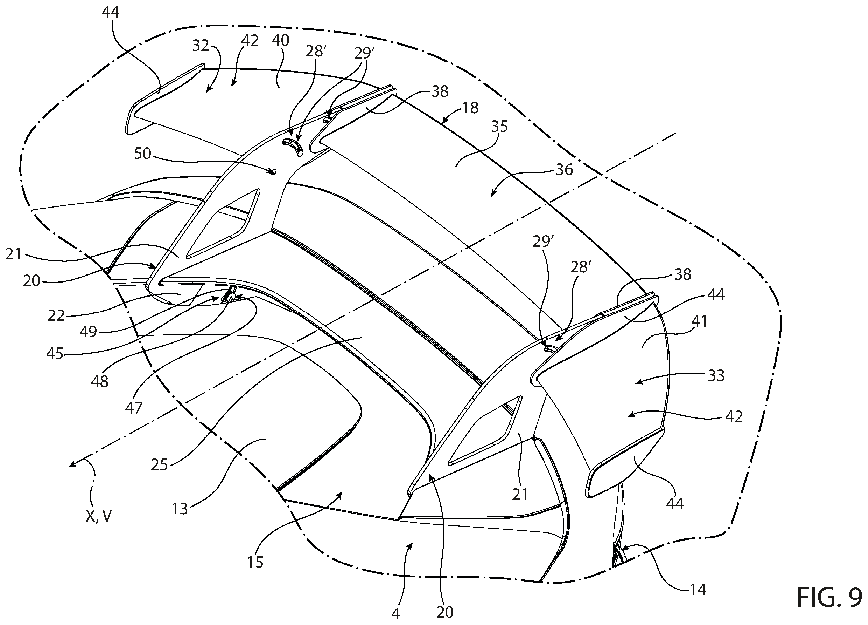

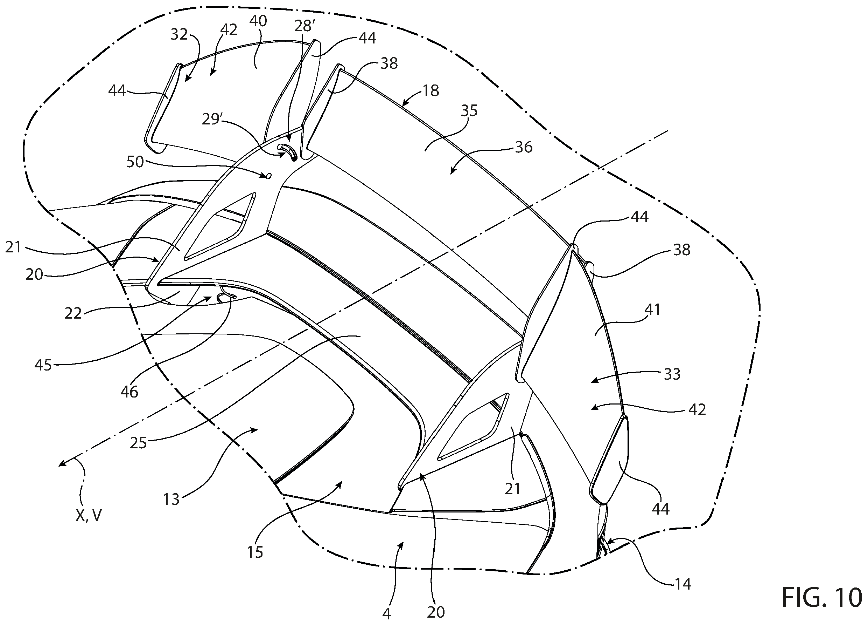

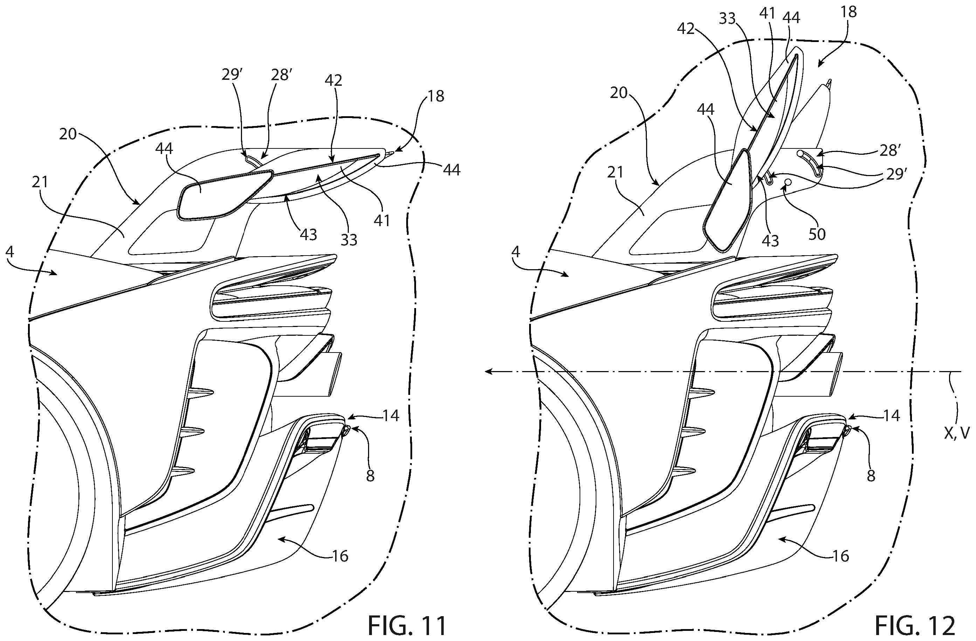

Figures 9 to 12 illustrate a different preferred embodiment of the present invention, in which the support brackets 20 carry guide members 28' configured to define a rotational movement of the rear wing 18 between an extended position (Figures 9 and 11), identical to that illustrated in Figures 1, 2, 4, 7 and 8, and a new retracted position (Figures 10 and 12) different from that illustrated in Figures 3 and 5, but in which the rear wing 18 itself is likewise arranged in front of the rear bumper 14 along the longitudinal axis X or along the travel direction V.

In the following description, parts identical or equivalent to those already described with reference to the embodiment of the automobile 1 in Figures 1 to 8 will be indicated, where possible, with the same references.

In particular, the guide members 28' comprise, for each support bracket 20, two slots 29', having circular arc profiles and arranged parallel to each other, and two hinge seats 50, defining respective centers of curvature for the slots 29'.

In greater detail, considering each support bracket 20, a slot 29' is slidingly engaged by one of the respective projections 30 of the central portion 31 of the rear wing 18, while the respective hinge seat 50 associated with said slot 29' is engaged by the other respective projection 30 of the same central portion 31; in a completely analogous manner, still considering each support bracket 20, the remaining slot 29' is slidingly engaged by one of the two projections 30 of the corresponding lateral portion 32, 33 of the rear wing 18, while the respective hinge seat 50 associated with said remaining slot 29' is engaged by the other respective projection 30 of the same lateral portion 32, 33.

The two opposite ends of each slot 29' define stop abutments for the respective projections 30 which engage them, thereby defining the extracted and retracted positions of the rear wing 18.

Also in this case, for each support bracket 20, at least one stabilizing member is provided (partially illustrated in figures 9 and 10 but entirely similar to those provided for the solution of figures 1 to 8), interposed between the frame 5 and the rear wing 18 and exerting a return force on the rear wing 18 itself in order to maintain it in the extracted position during the forward movement of the automobile 1 along the travel direction V.

The operation of this solution is analogous to that described previously, with the sole difference that the central portion 31 and the lateral portions 32, 33 of the rear wing 18 rotate, guided by the sliding of the projections 30 in the slots 29', in order to achieve the extended and retracted positions.

An examination of the characteristics of automobile 1 manufactured according to the present invention clearly reveals the advantages that it makes possible to obtain.

In particular, owing to the fact that the rear wing 18 can be moved in a guided manner between an extended position, arranged to the rear of the rear bumper 14 along the travel direction V, and a retracted position, arranged to the front of the rear bumper 14, it is possible to achieve, on the one hand, high aerodynamic efficiency during forward movement of the automobile 1 and, on the other hand, to pass the rear impact test with the impact device provided to meet the homologation standards of the automobile 1 itself for normal road use relating to low-speed impacts.

Indeed, this test provides that only the rear bumper 14 may be damaged as a result of the impact but does not prevent other parts of the automobile 1 from being touched during the test; the important aspect is that the parts of the automobile 1 that are touched, other than the rear bumper 14, are not damaged.

Therefore, during the aforementioned test, in order to avoid damages to the rear wing 18, it is sufficient to allow the latter to continue its guided movement towards the retracted position at the point of maximum penetration of the pendulum of the impact device inside the rear bumper 14.

The extracted position of the rear wing 18, attainable as a result of the airflow generated by the automobile 1 during its forward movement, has been designed to achieve, in combination with the rear diffuser 16, high rear downforce while minimizing drag.

The automobile 1 therefore exhibits, during its forward movement, excellent aerodynamic efficiency, since the ratio between the rear downforce that is generated and the aerodynamic drag is highly favorable (that is, the aforementioned ratio is very high).

Furthermore, the above-described automobile 1 is easy and economical to manufacture and features a reduced weight, since actuators are not required to move the rear wing 18 between the extended and retracted positions.

It is finally clear that modifications and variations may be made to the automobile 1 described and illustrated herein without thereby departing from the scope of protection of the present invention, as defined in the appended claims.

## Claims

1. Automobile (1) comprising:
- an outer body (4) extending along a longitudinal axis (X) between a front end (7) and a rear end (8), said longitudinal axis (X) coinciding with a travel direction (V) of the automobile (1) itself;
- a passenger compartment (6) formed within said outer body (4);
- a rear bumper (14) defining the rear end (8) of said outer body (4); and
- a rear wing (18) projecting in cantilever fashion from said outer body (4) and supported by at least one support bracket (20);
**characterized in that** said rear wing (18) is mounted movably with respect to said outer body (4) between an extended position, attainable during forward movement of the automobile (1), in which it projects rearwardly along the longitudinal axis (X) with respect to said rear bumper (14), and a retracted position, in which it is arranged forwardly with respect to said rear bumper (14) along said longitudinal axis (X).

2. Automobile according to claim 1, wherein said retracted position is achievable in the event of an external rear impact on the rear wing (18).

3. Automobile according to claims 1 or 2, wherein said extracted position of the rear wing (18) is achievable by virtue of the action of the airflow generated during the travel of the automobile (1) along the travel direction (V).

4. Automobile according to any one of the preceding claims, wherein, in said retracted and extended positions, said rear wing (18) is spaced from said rear end (8) of said outer body (8) by predetermined non-zero amounts along said longitudinal axis (X).

5. Automobile according to any one of the preceding claims, further comprising one or more guide members (28, 28') between said support bracket (20) and said rear wing (18) for guiding the movement of the rear wing (18) itself between said extended and retracted positions.

6. Automobile according to claim 5, wherein said one or more guide members (28) define a rectilinear translational movement of said rear wing (18) between said extended and retracted positions.

7. Automobile according to claim 5, wherein said one or more guide members (28') define a rotational movement of said rear wing (18) between said extended and retracted positions.

8. Automobile according to any one of claims 5 to 7, wherein said one or more guide members (28, 28') comprise one or more slots (29, 29') formed on said support bracket (20) and slidably engaged by one or more projections (30) of said rear wing (18).

9. Automobile according to any one of the preceding claims, further comprising one or more stabilizing members (45) interposed between a frame (5) of said outer body (4) and said rear wing (18) and exerting a return force on the rear wing (18) itself in order to maintain it in the extended position during the movement of the automobile (1) along the travel direction (V).

10. Automobile according to claim 9, wherein said stabilizing members (45) are elastic members (46) exerting an elastic return force on the rear wing (18) tending to maintain it in the extracted position, or magnets carried by said support bracket (20) and adapted to exert an electromagnetic attraction on the rear wing (18) to maintain it in said extracted position.

11. Automobile according to any one of the preceding claims, wherein said rear wing (18) is supported by two said support brackets (20) parallel to each other and comprises a central portion (31), extending transversely between the support brackets (20) themselves, and two lateral portions (32, 33), arranged at the opposite lateral ends of said central portion (31) and each projecting in cantilever fashion from a respective one of said support brackets (20).

12. Automobile according to claim 11, wherein each support bracket (20) comprises guide members (28, 28') for said central portion (31) and for the respective said lateral portion (32, 33) carried by the support bracket (20) itself.
